# EUROPÄISCHE PATENTSCHRIFT

(11) **EP 1 204 005 B1**
(45) Veröffentlichungstag und Bekanntmachung des Hinweises auf die Patenterteilung: **29.08.2007**
(21) Anmeldenummer: 01124955.4
(22) Anmeldetag: 19.10.2001
(51) Int. Cl.: G03G 9/09, G03G 9/12, C09D 5/03, C09D 11/00, C09B 67/00

(54) **Verwendung von gecoateten Pigmentgranulaten in elektrophotographischen Tonern und Entwicklern, Pulverlacken und Ink-Jet-Tinten**
Use of coated pigment granulates in electrophotographic toners and developers, powder paints and ink-jet inks
Utilisation de granulés de pigment revêtus dans des révélateurs électrophotographiques, laques en poudre et encre pour des procédés à jet d' encre

(30) Priorität: 02.11.2000 DE 10054344
(43) Veröffentlichungstag der Anmeldung: 08.05.2002
(73) Patentinhaber: Clariant Produkte (Deutschland) GmbH, 65929 Frankfurt am Main (DE)
(72) Erfinder: Rohr, Ulrike, Dr., 68199 Mannheim (DE); Baur, Rüdiger, Dr., 65817 Eppstein/Ts. (DE); Metz, Hans-Joachim, Dr., 64285 Darmstadt (DE); Stohr, Andreas, Dr., 67251 Freinsheim (DE)

(56) Entgegenhaltungen:
- US-A- 1 651 733
- US-A- 5 298 355
- PATENT ABSTRACTS OF JAPAN vol. 015, no. 415 (P-1265), 22. Oktober 1991 (1991-10-22) & JP 03 168760 A (FUJITSU), 22. Juli 1991 (1991-07-22)
- DATABASE WPI Section Ch, Week 199848 Derwent Publications Ltd., London, GB; Class A08, AN 1998-563352 XP002241603 & JP 10 251533 A (TOYO INK), 22. September 1998 (1998-09-22)
- DATABASE WPI Section Ch, Week 199317 Derwent Publications Ltd., London, GB; Class A04, AN 1993-137513 XP002241604 & JP 05 072818 A (SEIKO EPSOM), 26. März 1993 (1993-03-26)

## Beschreibung

Die vorliegende Erfindung betrifft den Einsatz von gecoateten Pigmentgranulaten in elektrophotographischen Tonern und Entwicklern, Pulverlacken, Ink-Jet-Tinten, Elektretmaterialien und Farbfiltern.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüber hinaus sind noch Spezialtoner, wie z.B. Magnet- oder Flüssigtoner, Latextoner, Polymerisationstoner und mikroverkapselte Toner z.B. auf Wachsbasis, im Einsatz.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüber hinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierern, Laserdruckern, LED-(Light emitting diods), LCS-(Liquid crystal shutter)-Druckern oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

6- bzw. 7-Farbensysteme sind ebenfalls bekannt. Basisfarben sind Rot, Grün, Blau, Cyan, Magenta, Gelb und Schwarz. Weiterhin können Vollfarbdrucke nach dem Pantone Hexachrome® System mit den Farben Cyan, Magenta, Yellow, Black, Orange und Grün erstellt werden.

Von Farbmitteln ist bekannt, dass sie die triboelektrische Aufladung von Tonern nachhaltig beeinflussen können. Daher ist es normalerweise nicht möglich, die Farbmittel einer einmal erstellten Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonern für Prozessfarbe noch zusätzlich zu den bereits vorher beschriebenen Schwierigkeiten dazu.

Darüber hinaus ist für die Praxis wichtig, dass die Farbmittel eine hohe Thermostabilität und eine gute Dispergierbarkeit besitzen. Typische Einarbeitungstemperaturen für Farbmittel in die Tonerharze liegen bei Verwendung von Knetern oder Extrudern zwischen 100 und 200°C. Dementsprechend ist eine Thermostabilität von 200°C, besser 250°C, von großem Vorteil. Wichtig ist auch, dass die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination.

Neben der physikalischen Wirkung der Tonerbestandteile hinsichtlich Coloristik und Elektrostatik sowie einer optimalen Dispergierbarkeit der Komponenten, wird die Qualität der Toner wesentlich durch den Herstellungsprozess beeinflusst.

Die Mehrzahl der Toner wird heute durch Blendprozesse hergestellt, die sich in die Teilschritte 1 bis 4 zerlegen:

| Prozessschritte | Ziel | Probleme |
|---|---|---|
| 1. Vormischung | Homogene Vormischung | Staub, unterschiedliche Vorprodukt-Teilchengröße |
| 2. Dispergierung | Homogene Verteilung | Inhomogenitäten |
| 3. Mahlung | Reduktion Partikelgröße | Ausbeute, Mahlbarkeit |
| 4. Sichtung | Einstellung von defin. d₅₀ | breite Verteilung |
| 5. Verpackung | Rieselfähigkeit | Klebrigkeit |

Neben der eigentlichen Dispergierung (Schritt 2) kommt der Vormischung eine zentrale Bedeutung zu. Typische Vorkomponenten wie Tonerbindemittel, Ladungssteuermittel, Additive wie Wachse und Farbmittel werden in definierten Konzentrationen vorgemischt, z.B. in Henschel- oder Taumelmischern. Nachteil bisheriger Verfahren ist, dass die Ausgangsprodukte zum Teil erhebliche Teilchengrößen-Unterschiede aufweisen (Tabelle 2). Dies führt häufig zu Dosierproblemen und Inhomogenitäten, insbesondere je mehr Komponenten mit unterschiedlichen Teilchengrößen verwendet werden.

**Tabelle 2 Typische Teilchengrößen von Tonereinsatzstoffen**

| Komponente | Typische Teilchengrößen |
|---|---|
| Bindemittel | ~ 600 µm - 800 µm |
| Pigment | < 60 µm (Agglomerate) |
| Ladungssteuermittel | < 60 µm |
| Wachs | ~ 20 µm - 2000 µm |

Die eingesetzten Rohstoffe zeigen oftmals Schwankungen von mehr als 1000 µm, wodurch Inhomogenitäten resultieren. Eine Vormahlung der Vormischung scheidet aus Kostengründen aus. Eine Reduktion der Teilchengrößen von Bindemitteln ist nur mit zusätzlichem Aufwand möglich und erhöht das Risiko einer elektrostatischen Aufladung und damit von Staubexplosionen. Eine Erhöhung der Teilchengrößen bei Pigmenten und Ladungssteuermittel ist aus anwendungstechnischen Gründen nicht möglich oder sinnvoll.

Die Aufgabe der vorliegenden Erfindung bestand darin, Tonereinsatzstoffe in einer Form bereitzustellen und zu elektrophotographischen Tonern zu verarbeiten, wobei die vorstehend genannten Schwierigkeiten überwunden werden und gleichzeitig Elektrostatik und Coloristik vorteilhaft beeinflusst werden.

Diese Aufgabe wurde überraschenderweise dadurch gelöst, dass das Farbmittel, gegebenenfalls in Kombination mit einem Ladungssteuermittel, in Form eines mit einem Wachs gecoateten Pigmentgranulats in das Bindemittel des Toners oder Pulverlacks eingearbeitet wird.

Gegenstand der Erfindung ist die Verwendung eines mit einem Wachs gecoateten Pigmentgranulats als Farbmittel in elektrophotographischen Tonern und Entwicklern, Pulverlacken, Ink-Jet-Tinten, Elektretfasern und Farbfiltern, dadurch gekennzeichnet, dass das gecoatete Pigmentgranulat eine Teilchengröße zwischen 0,05 und 5 mm, bevorzugt zwischen 0,1 und 2 mm, und einen Wachsgehalt von 1 bis 50 Gew.-%, vorzugsweise 5 bis 40 Gew.-%, bezogen auf das Gesamtgewicht des gecoateten Pigmentgranulats, aufweist.

Hiermit werden Farbmittel mit Teilchengrößen bereitgestellt, die auf die Teilchengrößen des Bindemittels abgestimmt sind. Eine homogene Vormischung des Farbmittels mit dem Bindemittel ist somit ohne größeren technischen Aufwand möglich.
Die erfindungsgemäß eingesetzten gecoateten Pigmentgranulate können hergestellt werden, indem ein Pigment z.B. während des Finishprozesses in einem organischen oder wässrig-organischen Medium mit einem Wachs versetzt wird, dann das organische Lösemittel entfernt wird, beispielsweise durch Wasserdampfdestillation oder Auswaschen mit Wasser, und die so entstandene wässrige Pigmentsuspension sprühgetrocknet wird. Bei dieser Behandlung, die zweckmäßigerweise während des Pigmentfinishprozesses durchgeführt wird, werden die Pigmentpartikel mit dem Wachs in innigen Kontakt gebracht. Nach Entfernen des organischen Lösemittels, z.B. durch Wasserdampfdestillation, wird eine sprühfähige wässrige Pigmentsuspension erhalten. Es kann zweckmäßig sein, die Suspension vor der Sprühtrocknung abzufiltrieren, durch Waschen eventuell vorhandene Salze zu entfernen und den durch die Filtration erhaltenen Presskuchen wieder zu einer sprühfähigen Suspension anzurühren. Beim Auswaschen mit Wasser wird zweckmäßigerweise so verfahren, dass der Feststoff abfiltriert, mit Wasser lösemittelfrei gewaschen und der dabei entstandene Presskuchen mit Wasser zu einer sprühfähigen Suspension verdünnt wird.
Durch die Sprühtrocknung wird eine Granulierung in eine geeignete Partikelgröße erreicht, ohne dass die während des Lösemittelfinishs erzielte Umhüllung der Pigmentpartikel mit dem Wachs beschädigt wird.
Durch ihre meist kugelförmige Gestalt sind die Granulate rieselfähig und damit gut dosierbar. Aufgrund ihrer Größe und Gewichtes sind die Granulate besonders staubarm.

Als organische Pigmente kommen z.B. Azopigmente, wie Monoazo-, Disazo-, Naphtol-, Metallkomplexpigmente, wie auch polycyclische Pigmente, wie Isoindolinon- und Isoindolinpigmente, Anthanthron-, Thioindigo-, Thiazinindigo-, Chinophthalon-, Anthrachinon-, Dioxazin-, Phthalocyanin-, Chinacridon-, Perylen-, Perinon-, Diketopyrrolopyrrol- und Azomethinpigmente, oder Mischungen oder Mischkristalle der genannten Pigmente in Betracht.
Bevorzugte Blau- und/oder Grünpigmente sind Kupferphthalocyanine, wie C.I. Pigment Blue 15, 15:1, 15:2, 15:3, 15:4, 15:6, 16 (metallfreies Phthalocyanin), oder Phthalocyanine mit Aluminium, Nickel, Eisen oder Vanadium als Zentralatom, verbrückte Phthalocyanin-Dimere/Oligomere wie z.B. Si-verbrückte Phthalocyanine, weiterhin Triarylcarboniumpigmente, wie Pigment Blue 1, 2, 9, 10, 14, 62, Pigment Green 1, 4, 45.
Bevorzugte Orangepigmente sind z.B. P.O. 5, 62, 36, 34, 13, 43, 71, 72 Bevorzugte Gelbpigmente sind z.B. P.Y. 12, 13, 17, 83, 93, 97, 122, 155, 180, 174, 185.
Bevorzugte Rotpigmente sind z.B. P.R. 48, 57, 122, 146, 147, 176, 184, 185, 186, 202, 207, 209, 238, 254, 255, 269, 270, 272.
Bevorzugte Violettpigmente sind z.B. P.V. 1,19, 23.
Beispiele für Mischkristalle sind P.V.19/P.R.122 oder P.R.146/147.

Als anorganische Pigmente kommen Ruße, TiO₂, Eisenoxide, Perlglanzpigmente, Effektpigmente und Metallpigmente in Betracht.

Der Begriff "Wachs" bezeichnet eine Reihe natürlicher oder künstlich gewonnener Stoffe, die in der Regel folgende Eigenschaften aufweisen: Bei 20°C knetbar, fest bis brüchig hart, grob bis feinkristallin, durchscheinend bis opak, jedoch nicht glasartig; über 40°C ohne Zersetzung schmelzend, schon wenig oberhalb des Schmelzpunktes verhältnismäßig niedrigviskos und nicht fadenziehend, stark temperaturabhängige Konsistenz und Löslichkeit, unter leichtem Druck polierbar (vgl. Ullmanns Enzyklopädie der technischen Chemie, Band 24, 4. Auflage 1983, S. 1-49, Verlag Chemie, Weinheim und Römpps Chemie-Lexikon, Band 6, 8. Auflage1988, S. 463, Franck'sche Verlagshandlung).

Als Wachse werden bevorzugt: Naturwachse, wie Pflanzenwachse, z.B. Carnaubawachs, Candellilawachs, und tierische Wachse, z.B. Bienenwachs, modifizierte Naturwachse, wie z.B. Paraffinwachse, Mikrowachse, teilsynthetische Wachse, wie z.B. Montanesterwachse, oder vollsynthetische Wachse, wie Polyolefinwachse, z.B. Polyethylen und Polypropylenwachse, Polyethylenglykolwachse, Cycloolefincopolymerwachse, Amidwachse, wie z.B. N,N'-Distearylethylendiamin, Zirconocenwachse sowie chlor- oder fluorhaltige Polyolefinwachse oder Polyethylen-Polytetrafluorethylen-Wachsmischungen.

Besonders bevorzugt sind Polyolefinwachse, sowie polare Gruppen enthaltende Polyolefinwachse, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureanhydrid- oder Hydroxygruppen enthaltenden Monomer.

Wachse im Sinne der vorliegenden Erfindung können auch höhermolekulare Verbindungen sein, die einen wachsartigen Charakter aufweisen und vorzugsweise durch Polykondensations-, Polyadditions- oder Polymerisationsverfahren hergestellt wurden, z.B. thermoplastische Polyester-, Epoxid-, Styrol-Acrylat-Copolymer-, Styrol-Butadien-Copolymer-, Cycloolefincopolymer-Harze, wie z.B. ®Topas. Um eine ausreichende Löslichkeit bei erhöhter Temperatur in organischen Lösungsmitteln zu besitzen, besitzen solche Polymere meist ein Zahlenmittel des Molekulargewichts (M̅ₙ) von 500 bis zu 20000. Bevorzugt sind Wachse mit einem Zahlenmittel des Molekulargewichts (M̅ₙ) von 800 bis zu 10000, besonders bevorzugt mit einem Zahlenmittel des Molekulargewichts (M̅ₙ) von 1000 bis zu 5000.

Der Tropfpunkt der erfindungsgemäß eingesetzten Wachse oder die Erweichungstemperatur der genannten wachsartigen Polymere liegt vorzugsweise im Bereich von 60 bis 180°C, besonders bevorzugt im Bereich von 80 bis 140°C.

Je nach Anwendungsgebiet des Pigmentgranulates kann die Menge und die Art des Wachses variieren, vor allem um die Verträglichkeit mit dem Anwendungsmedium zu gewährleisten. Um ein definiertes Eigenschaftsprofil zu erzeugen, ist es auch möglich, eine Mischung aus mindestens zwei verschiedenen Wachsen oder Polymeren zu verwenden.

Zweckmäßigerweise enthält das Pigmentgranulat das Pigment in einer Menge von 50 bis 99 Gew.-%, vorzugsweise 60 bis 95 Gew.-%, und das Wachs in einer Menge von 1 bis 50 Gew.-%, vorzugsweise 5 bis 40 Gew.-%, bezogen auf das Gesamtgewicht des Pigmentgranulats.

Unter Finishprozess versteht der Fachmann eine Nachbehandlung des bei der Synthese entstandenen Rohpigments, meist in Form eines wasserfeuchten Presskuchens, einer wässrigen Pigmentsuspension oder eines Trockenpigments, in einem Finishmedium, z.B. in einem organischem Lösungsmittel oder einer Mischung aus Wasser und organischem Lösungsmittel, um eine für die spätere Anwendung vorteilhafte Kristallform und/oder Kristallmodifikation zu erzeugen. Zweckmäßigerweise wird dabei eine 2 bis 30 gew.-%ige Suspension des Rohpigments oder Rohpigmentpresskuchens im Finishmedium, gegebenenfalls unter Erhitzen, unter Zugabe des Wachses gerührt, geknetet und/oder unter Rückfluss erhitzt.

Als Finishmedium wird vorzugsweise ein solches organisches Lösungsmittel oder eine solche Mischung aus Wasser und einem organischen Lösungsmittel ausgewählt, das bei der Finish-Temperatur das verwendete Wachs partiell oder vollständig löst und durch Wasserdampfdestillation oder Auswaschen entfernt werden kann. Bevorzugte Lösungsmittel sind aliphatische Alkohole, wie z.B. n-Butanol, Isobutanol, n-Octanol, Isooctanol; aromatische Kohlenwasserstoffe, wie z.B. Benzol, Toluol, Xylol, Kresol, Chlorbenzol, 1,2-Dichlorbenzol; Ester wie z.B. Ethylacetat, Butylacetat; Ketone wie z.B. Methylethylketon, Methylisobutylketon oder Cyclohexanon; dipolar aprotische Lösungsmittel wie z.B. N-Methylpyrrolidon, Dimethylsulfoxid oder Sulfolan.

Die Finish-Temperaturen können beispielsweise im Bereich von 20 bis 200°C, vorzugsweise 60 bis 180°C, liegen. Der Finishprozess dauert zweckmäßigerweise 1 bis 24 Stunden, bevorzugt 2 bis 10 Stunden. Es kann vorteilhaft sein, den Finishprozess so durchzuführen, dass zunächst, z.B. für 1- 10 Stunden auf 60 bis 200°C erhitzt, dann auf 100 bis 20°C abgekühlt und das Wachs zugegeben wird, und dann erneut auf 60 bis 200°C erhitzt wird. Es ist auch möglich, das Wachs während des Finishprozesses dem Finishansatz direkt, d.h. ohne zwischenzeitliches Abkühlen, zuzugeben.

Bei dem Finishprozess wird das üblicherweise lipophile Pigment von der organischen Phase (Lösungsmittel und Wachs) umhüllt. Diese Vorgehensweise bietet den Vorteil, dass das Pigment feinverteilt in der organischen Phase vorliegt. Eine endgültige Bedeckung der Pigmentoberfläche mit Wachs wird durch die Abtrennung des Lösungsmittels erreicht, was durch eine Wasserdampfdestillation (Temperatur z.B. 80 bis 100°C) oder durch Auswaschen mit Wasser auf einem Filter, zweckmäßig bei 20 bis 95°C, geschieht. Danach liegt eine wässrige Suspension von mit Wachs belegten Pigmenten vor. Die Suspension wird gegebenenfalls mit Wasser auf die gewünschte Konzentration, zweckmäßigerweise auf eine 5 bis 30 gew.-%ige Suspension des mit Wachs belegten Pigments, eingestellt, gegebenenfalls mit Hilfe einer Kolloidmühle oder eines vergleichbaren Aggregates homogenisiert und anschließend zum Granulat sprühgetrocknet. In manchen Fällen kann für eine optimale Benetzung der Pigmentoberfläche mit dem Wachs die Zugabe eines Tensids günstig sein. Als Tenside kommen sowohl kationische Tenside, wie z.B. quartäre Ammoniumsalze, langkettige Alkylamine (im neutral bis schwach saurem pH-Bereich); anionische Tenside wie z.B. Carbonsäuren, Sulfonsäuren, Sulfosäureester, wie z.B. Sulfobernsteinsäureester, und deren Salze; Amphotenside, wie z.B. Betaine und nichtionische Tenside, wie z.B. Zuckeralkylate und -acylate, ethoxylierte Zuckeralkylate und -acylate, Glycerinester, Polyethylenglykolester und ethoxylierte Fettsäuren, Fettalkohol- und Fettaminethoxylate, in Betracht.

Weiterhin können bei der Herstellung der Pigmentgranulate zusammen mit den Wachsen weitere Zusatzstoffe, wie z.B. Farbstoffe oder Ladungssteuermittel, auf die Pigmentoberfläche aufgebracht und so auf die jeweilige Anwendung in der Ink-Jet-Tinte, dem Toner oder dem Pulverlack abgestimmt werden. So kann z.B. ein Ladungssteuermittel gelöst oder suspendiert im Finishmedium zugesetzt werden. Dies führt zu einer Vereinfachung im Tonerherstellungsprozess und zu einer besonders homogenen Verteilung des Ladungssteuermittels auf der Pigmentoberfläche.

Zur Sprühgranulierung sind Sprühtürme mit Einstoffdüse oder Sprühtürme, die eine Aufbaugranulierung durchführen (z.B. Fluidized bed Spray Drier), geeignet. Bei Sprühtürmen mit Einstoffdüse wird die Suspension in Form größerer Tropfen versprüht und das Wasser verdampft. Liegen die Temperaturen im Sprühturm oberhalb des Tropfpunktes des Wachses, schmilzt das Wachs auf und verläuft zu einem kugelförmigen Granulat mit glatter Oberfläche.

Bei FSD-Sprühtürmen wird die Suspension zu einem feinen Pulver versprüht. Die kräftige Fluidisierung im Fließbett und die Rezirkulation der durch die Abluft mitgerissenen Feinpulverpartikel, die in einem Vorzyklon abgeschieden werden, bewirken, dass die Sprühtrocknung in einer turbulenten Pulverwolke stattfindet. Hierdurch entsteht ein Puderungseffekt und bei Temperaturen im Turm oberhalb des Tropfpunktes des Wachses verkleben die Partikel zu einem himbeerförmigen Granulat. Die Restfeuchte und die Granulometrie werden im Fließbett kontrolliert. Die Gaseintrittstemperatur im Sprühturm liegt normalerweise im Bereich von 180 bis 300°C, bevorzugt 190 bis 280°C, die Gasaustrittstemperatur im Bereich von 70 bis 150°C, bevorzugt 90 bis 130°C.

Außer in elektrophotographischen Tonern und Entwicklern können die gecoateten Pigmentgranulate auch als Farbmittel in Pulvern und Lacken, insbesondere in triboelektrisch oder elektrokinetisch versprühten Pulverlacken, wie sie zur Oberflächenbeschichtung von Gegenständen aus beispielsweise Metall, Holz, Textilmaterial, Papier oder Kautschuk zur Anwendung kommen, eingesetzt werden. Der Pulverlack oder das Pulver erhält seine elektrostatische Aufladung im allgemeinen nach einem der beiden folgenden Verfahren:
a) Beim Corona-Verfahren wird der Pulverlack oder das Pulver an einer geladenen Corona vorbeigeführt und hierbei aufgeladen,
b) beim triboelektrischen Verfahren wird vom Prinzip der Reibungselektrizität Gebrauch gemacht.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise Epoxidharze oft in Kombination mit carboxyl- und hydroxylgruppenhaltigen Polyesterharzen eingesetzt.

Darüber hinaus kann das verbesserte triboelektrische Verhalten des Farbmittels zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiet und können ihre Ladung durch Corona- oder Triboaufladung erhalten (Lit: G.M. Sessler, "Electrets", Topics in Applied Physics, Vol 33, Springer Verlag, New York, Heidelberg, 2nd Ed., 1987).

Darüber hinaus sind die gecoateten Pigmentgranulate auch geeignet als Farbmittel für Farbfilter, sowohl für die subtraktive wie für die additive Farberzeugung (P. Gregory "Topics in Applied Chemistry: High Technology Application of Organic Colorants" Plenum Press, New York 1991, S. 15- 25), sowie als Farbmittel in "electronic inks (E-ink)" für "electronic newspapers". Bei "electronic newspapers" besteht das Druckmedium aus zwei Folien, in deren Zwischenraum halbseitig gefärbte Partikel selektiv beweglich eingebracht sind und durch Anlegen äußerer Kräfte, wie elektrischer Felder, ausgerichtet werden, um das Druckbild zu erzeugen (Deutscher Drucker, Nr. 13, S.28-32).

Häufig stellt sich die Aufgabe, den Farbton in elektrophotographischen Bunttonern, Pulverlacken oder in Ink-Jet-Tinten zu nuancieren und den anwendungsspezifischen Anforderungen anzupassen. Hierzu bieten sich insbesondere weitere organische Buntpigmente, anorganische Pigmente sowie Farbstoffe an.
Anorganische Buntpigmente und/oder Farbstoffe können in Mischungen mit den gecoateten Pigmentgranulaten in Konzentrationen zwischen 0,01 und 50 Gew.-%, bevorzugt zwischen 0,1 und 25 Gew.-% und besonders bevorzugt zwischen 0,1 % und 15 Gew.-%, bezogen auf das Gesamtgewicht des gecoateten Pigmentgranulats, eingesetzt werden.
Dabei werden die Pigmentgranulate gemischt mit 1) Pigmenten in Form der Pulver bzw. Mischungen aus Pulverpigmenten, 2) Pigmentpreßkuchen oder sprühgetrockneten Preßkuchen (10-90 % Pigmentgehalt), 3) Pigmentkonzentraten in einem festen oder flüssigen Trägermaterial, wie z. B. Masterbatches, 4) anderen Pigmentgranulaten, oder einer Kombination davon. Solche Mischungen können aber auch durch Dispergieren (Extrusion, Kneten, Walzenstuhlverfahren, Perlmühlen, Ultraturrax) in Gegenwart eines Trägermaterials in fester oder flüssiger Form (Tinten auf wässriger und nicht-wässriger Basis) sowie durch Flushen in Gegenwart eines Trägermaterials hergestellt werden. Wird das Farbmittel mit hohen Wasser- oder Lösemittelanteilen eingesetzt (> 5 %), so kann das Mischen auch in Gegenwart erhöhter Temperaturen und durch Vakuum unterstützt ablaufen.

Insbesondere zur Steigerung der Brillanz, aber auch zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Beispiele seien genannt: C.I. Reactive Yellow 37, Acid Yellow 23, Reactive Red 23, 180, C.I. Acid Red 1, 8, 52, 87, 94, 115, 131, 144, 152, 154, 186, 245; C.I. Direct Red 1, 11, 37, 62, 75, 81, 87, 89, 95, 227; Reactive Blue 19, 21, Acid Blue 9, Direct Blue 199, Solvent Yellow 14, 16, 25, 56, 62, 64, 79, 81, 82, 83, 83:1, 93, 98, 133, 162, 174, Solvent Red 8, 19, 24, 49, 89, 90, 91, 92, 109, 118, 119, 122, 124, 127, 135, 160, 195, 212, 215, Solvent Blue 44, 45, Solvent Orange 41, 60, 63, Disperse Yellow 64, Vat Red 41, Solvent Black 45, 27.

Auch können Farbstoffe und Pigmente mit fluoreszierenden Eigenschaften, wie ®Luminole (Riedel-de Haen), in Konzentrationen von 0,0001 bis 10 Gew.-%, bevorzugt von 0,001 bis 5 Gew.-%, ganz besonders bevorzugt zwischen 0,01 und 1 %, bezogen auf das Gesamtgewicht der gecoateten Pigmentgranulate, eingesetzt werden, beispielsweise um fälschungssichere Toner herzustellen.

Anorganische Pigmente, wie beispielsweise TiO₂ oder BaSO₄, dienen in Mischungen zur Aufhellung. Weiterhin sind Mischungen mit Effekt-Pigmenten, wie beispielsweise Perlglanz-Pigmenten, Fe₂O₃-Pigmenten (®Paliochrome) sowie Pigmenten auf Basis cholesterischer Polymere, die in Abhängigkeit vom Beobachtungswinkel unterschiedliche Farbeindrücke ergeben, geeignet.

Die erfindungsgemäß eingesetzten Pigmentgranulate können mit positiv oder negativ steuernden Ladungssteuermitteln, kombiniert werden, um ein bestimmtes Aufladungsverhalten zu erreichen. Auch ein gleichzeitiger Einsatz von positiven und negativen Ladungssteuermitteln ist möglich. Die Ladungssteuermittel und die Pigmentgranulate können getrennt in das Bindemittel eingearbeitet werden, oder das gecoatete Pigmentgranulat enthält, wie vorstehend beschrieben, das Ladungssteuermittel.

Als Ladungssteuermittel kommen beispielsweise in Betracht:
Triphenylmethane; Ammonium- und Immoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; Resorcinole; ringförmig verknüpfte Oligosaccharide (Cyclodextrine) und deren Derivate, insbesondere Borester-Derivate, Interpolyelektrolytkomplexe (IPECs); Polyestersalze; salzartige Struktursilikate; Metallkomplexverbindungen, insbesondere Carboxylat-Metall, Salicylat-Metall- und Salicylat-Nichtmetallkomplexe, Aluminium-Azokomplexe, α-Hydroxycarbonsäure-Metall- und -Nichtmetallkomplexe; Borkomplexe von 1,2-Dihydroxyaromaten, 1,2-Dihydroxyaliphaten oder 2-Hydroxy-1-Carboxyaromaten; Benzimidazolone; Azine, Thiazine oder Oxazine, die im Colour Index als Pigments, Solvent Dyes, Basic Dyes oder Acid Dyes aufgeführt sind.

Beispiele für farbige Ladungssteuermittel, die einzeln oder in Kombination untereinander mit dem erfindungsgemäßen Pigmentgranulat kombiniert werden können, sind:
Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlor-triphenylmethyltetrachloraluminats; Metallkomplexe mit den CAS-Nummern 84179-66-8 (Chromazokomplex), 115706-73-5 (Eisenazokomplex), 31714-55-3 (Chromazokomplex), 84030-55-7 (Chromsalicylatkomplex), 42405-40-3 (Chromsalicylatkomplex) sowie die quaternäre Ammoniumverbindung CAS-Nr. 116810-46-9 sowie Aluminum-Azokomplexfarbstoffe, Metall-Carboxylate und Sulfonate.

Beispiele von für die Herstellung von Elektretfasern gut geeigneten Ladungssteuermitteln der Triphenylmethan-Reihe sind die in der DE-A-1 919 724 und der DE-A-1 644 619 beschriebenen Verbindungen.

Von besonderem Interesse sind Triphenylmethane wie beschrieben in US-A-5 051 585, insbesondere solche der Formel (2) 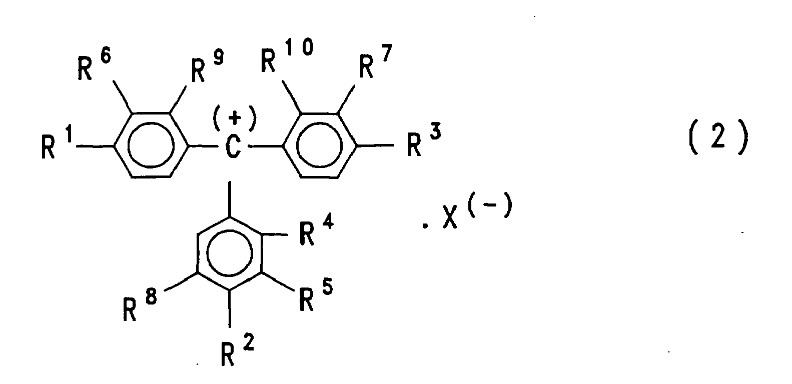 worin R¹ und R³ Phenylaminogruppen, R² eine m-Methylphenylaminogruppe und die Reste R⁴ bis R¹⁰ alle Wasserstoff sind.

Weiterhin geeignet sind Ammonium- und Immoniumverbindungen, wie beschrieben in US-A-5 015 676, sowie fluorierte Ammonium- und Immoniumverbindungen, wie beschrieben in US-A-5 069 994, insbesondere solche der Formel (3) 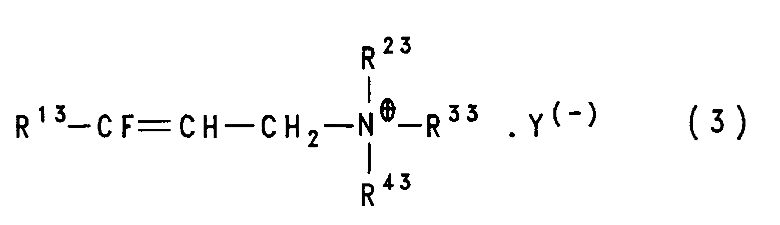 worin
R¹³ perfluoriertes Alkyl mit 5 bis 11 C-Atomen,
R²³, R³³ und R⁴³ gleich oder verschieden sind und Alkyl mit 1 bis 5, vorzugsweise 1 bis 2, C-Atomen bedeuten und
Y⁻ ein stöchiometrisches Äquivalent eines Anions, vorzugsweise eines Tetrafluoroborat- oder Tetraphenylborat-Anions ist.

Weiterhin geeignet sind biskationische Säureamide, wie beschrieben in WO 91/10172.

Weiterhin geeignet sind Diallylammoniumverbindungen, wie beschrieben in DE-A-4 142 541 sowie die aus diesen erhältlichen polymeren Ammoniumverbindungen der Formel (6), wie beschrieben in DE-A-4 029 652 oder DE-A-4 103 610 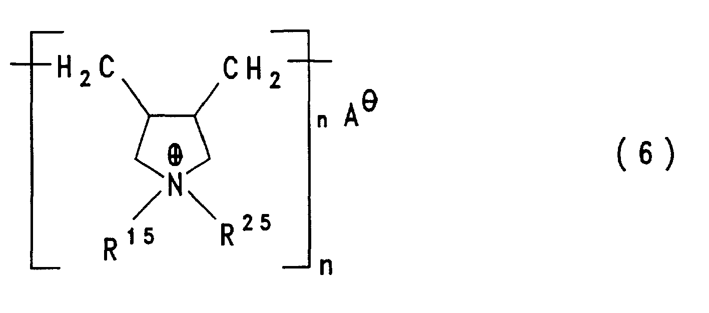 worin n einen Wert hat, der Molekulargewichten von 5000 bis 500000 g/mol, vorzugsweise Molekulargewichten von 40000 bis 400000 g/mol, entspricht.

Weiterhin geeignet sind Arylsulfid-Derivate, wie beschrieben in DE-A-4 031 705, insbesondere solche der Formel (7) 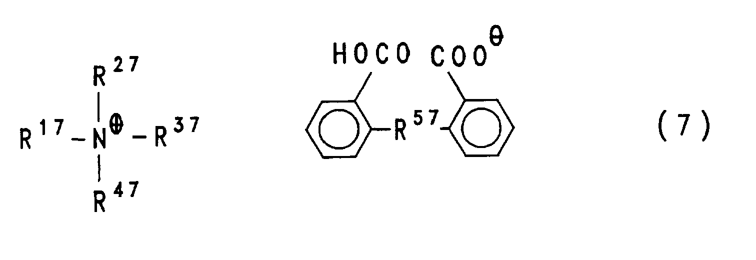 worin
R¹⁷, R²⁷, R³⁷ und R⁴⁷ gleiche oder verschiedene Alkylgruppen mit 1 bis 5, vorzugsweise 2 oder 3, C-Atomen bedeuten, und
R⁵⁷ einer der zweiwertigen Reste -S-, -S-S-, -SO- oder -SO₂- ist.
Beispielsweise sind R¹⁷ bis R⁴⁷ Propylgruppen und R⁵⁷ die Gruppe -S-S-.

Weiterhin geeignet sind Phenolderivate, wie beschrieben in EP-A-0 258 651, insbesondere solche der Formel (8) 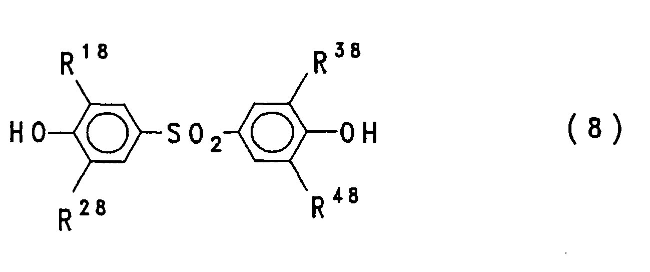 worin
R¹⁸ und R³⁸ Alkyl- oder Alkenylgruppen mit 1 bis 5, vorzugsweise 1 bis 3,
C-Atomen, und R²⁸ und R⁴⁸ Wasserstoff oder Alkyl mit 1 bis 3, vorzugsweise Methyl, bedeuten.

Weiterhin geeignet sind Phosphoniumverbindungen und fluorierte Phosphoniumverbindungen, wie beschrieben in US-A-5 021 473 und in US-A-5 147 748. Weiterhin geeignet sind Calix(n)arene, wie beschrieben in EP-A-0 385 580, EP-A-0 516 434 und in Angew. Chemie (1993), 195, 1258.

Weiterhin geeignet sind salzartige Struktursilikate, wie beschrieben in der noch unveröffentlichten deutschen Patentanmeldung P 199 57 245.3.

Weiterhin geeignet sind Metallkomplexverbindungen, wie Chrom-, Kobalt-, Eisen-, Zink- oder Aluminium-Azokomplexe oder Chrom-, Kobalt-, Eisen-, Zink- oder Aluminium-Salicyl- oder Borsäurekomplexe der Formel (14) 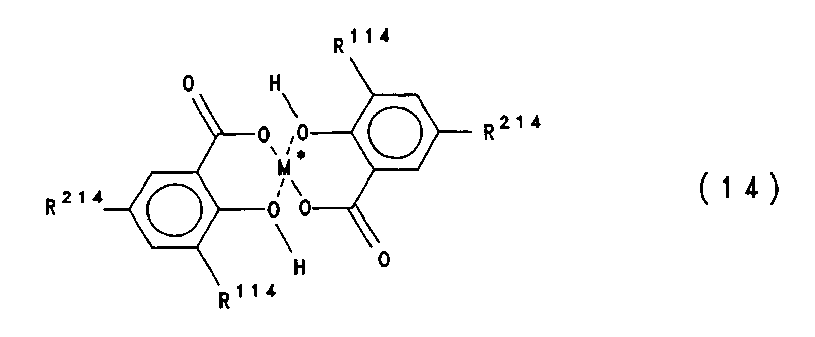 worin
M* ein zweiwertiges Metall-Zentralatom, vorzugsweise ein Chrom, Aluminium-, Eisen-, Bor- oder Zinkatom,
R¹¹⁴ und R²¹⁴ gleiche oder verschiedene, geradkettige oder verzweigte Alkylgruppen mit 1 bis 8, vorzugsweise 3 bis 6, C-Atomen, beispielsweise tert. Butyl, bedeuten.

Weiterhin geeignet sind Benzimidazolone, wie beschrieben in EP-A-0 347 695.

Weiterhin geeignet sind ringförmig verknüpfte Oligosaccharide, wie beschrieben in DE-A-4 418 842.
Weiterhin geeignet sind Polymersalze, wie beschrieben in DE-A-4 332 170, insbesondere das dort in Beispiel 1 beschriebene Produkt.

Weiterhin geeignet sind Cyclooligosaccharid-Verbindungen, wie sie beispielsweise in der DE-A-1 971 1260 beschrieben sind, die durch Umsetzung eines Cyclodextrins oder Cyclodextrin-Derivates mit einer Verbindung der Formel 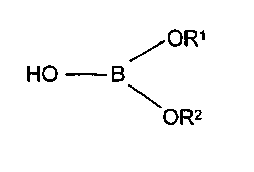 erhältlich sind, worin R¹ und R² Alkyl, bevorzugt C₁-C₄-Alkyl, bedeuten.

Weiterhin geeignet sind Inter-Polyelektrolyt-Komplexe, wie sie beispielsweise in der DE-A-197 32 995 beschrieben sind. Besonders geeignet sind hierbei Verbindungen, die ein Molverhältnis von polymeren kationischen zu polymeren anionischen Gruppen von 0,9:1,1 bis 1,1:0,9 haben.

Weiterhin geeignet, insbesondere bei der Anwendung in Flüssigtonern (Handbook of Imaging Materials, 1991, Marcel Dekker, Inc. Kap. 6 Liquid Toner Technology), sind oberflächenaktive, ionische Verbindungen und sogenannte Metallseifen. Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons ®Oloa 1200).
Weiterhin geeignet sind Soyalecithin und N-Vinylpyrrolidon-Polymere.
Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.
Weiterhin geeignet, insbesondere in Flüssigtonern, sind di- und trivalente Carboxylate, insbesondere Aluminium-tristearat, Bariumstearat, Chromstearat, Magnesiumoktat, Calziumstearat, Eisennaphthalit und Zinknaphthalit.

Weiterhin geeignet sind chelatisierende Ladungssteuermittel, wie in EP 0 636 945 A1 beschrieben, metallische (ionische) Verbindungen, wie in EP 0 778 501 A1 beschrieben, Phosphat-Metallsalze, wie in JA 9 (1997)-106107 beschrieben, Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die erfindungsgemäß verwendeten Pigmentgranulate können 0 bis 49 Gew.-%, vorzugsweise 0,1 bis 30 Gew.-%, insbesondere 1 bis 20 Gew.-%, bezogen auf das Gesamtgewicht des Granulats, an Ladungssteuermitteln enthalten.

Die Kombination von erfindungsgemäßem gecoateten Pigmentgranulat und Ladungssteuermitteln kann durch physikalisches Mischen oder durch Zugabe des Ladungssteuermittels während des Coatingverfahrens erfolgen. Beide Komponenten können auch vorteilhaft bei Polymerisationstonern, bei denen das Bindemittel in Gegenwart der Pigmentgranulate und ggf. des Ladungssteuermittels polymerisiert wird, zugesetzt werden oder bei der Herstellung von Flüssigtonern in hochsiedenden inerten Lösemitteln, wie Kohlenwasserstoffen, eingesetzt werden. In einer weiteren Variante können auch triboelektrisch modifizierte Pigmente, bei denen das Ladungssteuermittel während der Pigmentsynthese zugegeben wurde und Bestandteil des Pigments ist, eingesetzt werden (EP-A-0 359 123 und EP-A-0 362 703).

Auch sind die erfindungsgemäßen Pigmentgranulate für Elektrokoagulationstoner auf wässriger Basis geeignet.

Die erfindungsgemäße Verwendung von gecoateten Pigmentgranulaten hat nicht nur verfahrenstechnische Vorteile der Tonerherstellung, sondern bewirkt auch ein verbessertes Aufladungsverhalten des elektrophotographischen Toners. Gegenüber einem Toner, der durch eine getrennte Zugabe von Pigmentpulver und Wachs ins Bindemittel hergestellt wurde, zeigen die erfindungsgemäß mit demselben Wachs gecoateten Pigmentgranulate überraschenderweise eine wesentlich bessere Ladungskonstanz über den gesamten Aktivierzeitraum.

Die erfindungsgemäß verwendeten gecoateten Pigmentgranulate werden zweckmäßigerweise in einer Konzentration von 0,1 bis 90 Gew.-%, vorzugsweise von 0,5 bis 40 Gew.-%, besonders bevorzugt von 1 bis 20 Gew.-%, bezogen auf die Gesamtmischung, in das Bindemittel des jeweiligen Toners (flüssig oder trocken), Entwicklers, Pulverlacks, Elektretmaterials oder des elektrostatisch zu trennenden Polymers homogen, beispielsweise durch Extrudieren oder Einkneten, eingearbeitet oder dem Polymerisationsvorgang des Bindemittels zugesetzt.
Ladungssteuermittel werden zweckmäßigerweise in einer Menge (bezogen auf Trockenmasse des Ladungssteuermittels) von 0,1 bis 20 Gew.-%, vorzugsweise 0,5 bis 10 Gew.-%, bezogen auf das Gesamtgewicht des Toners, Entwicklers, Pulverlacks oder Elektretmaterials, eingesetzt.
Dabei können die Pigmentgranulate sowie die vorstehend erwähnten Ladungssteuermittel, sofern diese nicht schon im Pigmentgranulat enthalten sind, als getrocknete und gemahlene Pulver, Dispersionen oder Suspensionen, z.B. in organischen und/oder anorganischen Lösungsmitteln, Presskuchen (der z.B. zum sogenannten Flush-Verfahren eingesetzt werden kann), sprühgetrocknete Presskuchen, Masterbatch, Präparation, angeteigte Paste, als auf geeignete Träger, wie z.B. Kieselgur, TiO₂, Al₂O₃, aus wässriger oder nicht-wässriger Lösung aufgezogene Verbindung oder in sonstiger Form eingesetzt werden.
Die Pigmentgranulate können auch als Pigmentkonzentrat (Masterbatch) in einem Trägermaterial, z.B. einem Polymer, mit 30 bis 80 Gew,-% Pigmentgehalt eingesetzt werden.

Die Höhe der elektrostatischen Aufladung der elektrophotographischen Toner oder der Pulverlacke, in welche das erfindungsgemäße Pigmentgranulat homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Messstand die elektrostatische Aufladung gemessen.

Die Transparenz und Farbstärke in Tonerbindemittelsystemen wird wie folgt untersucht: In 70 Gew.-Teile eines Rohfirnis (bestehend aus 15 Gew.-Teilen des jeweiligen Tonerharzes und 85 Gew.-Teilen Ethylacetat) werden 30 Gew.-Teile des pigmentierten Testtoners mit einem Dissolver eingerührt (45 min bei 3500 upm). Der so erzeugte Testtonerfirnis wird gegen einen gleichermaßen erzeugten Standardpigmentfirnis mit einem Handcoater auf geeignetes Papier (z.B. Chromoluxkarte) aufgerakelt. Eine geeignete Rakelgröße ist z.B. K bar N 5 (= 24 µm Rakelschichtdicke). Das Papier hat zur besseren Bestimmung der Transparenz einen schwarzen Balken aufgedruckt, die Transparenz- und Farbstärkeunterschiede in dL-Werten werden nach DIN 55 988 bestimmt, bzw. nach der Prüfvorschrift Marketing Pigmente, Clariant GmbH "Visuelle und Farbmetrische Bewertung von Pigmenten" Ausgabe 3, 1996 (Nr. 1/1) bewertet.

Weiterhin wurde gefunden, dass die gecoateten Pigmentgranulate als Farbmittel in Ink-Jet-Tinten auf wässriger (einschließlich Mikroemulsionstinten) und nicht-wässriger ("solvent-based") Basis, sowie in solchen Tinten, die nach dem Hot-melt-Verfahren arbeiten, geeignet sind.

Mikroemulsionstinten basieren auf organischen Lösemitteln, Wasser und ggf. einer zusätzlichen hydrotropen Substanz (Grenzflächenvermittler). Tinten auf nichtwässriger Basis enthalten im wesentlichen organische Lösemittel und ggf. eine hydrotrope Substanz.

Die fertigen Aufzeichnungsflüssigkeiten enthalten im allgemeinen 0,5 bis 30 Gew.-%, vorzugsweise 1,5 bis 16 Gew.-%, der gecoateten Pigmentgranulate, bezogen auf das Gesamtgewicht der Aufzeichnungsflüssigkeit.

Mikroemulsionstinten bestehen im wesentlichen aus 0,5 bis 30 Gew.-%, vorzugsweise 1,5 bis 16 Gew.-%, der gecoateten Pigmentgranulate, 5 bis 99 Gew.-% Wasser und 0,5 bis 94,5 Gew.-% organischem Lösungsmittel und/oder hydrotropen Verbindung.

"Solvent based" Ink-Jet-Tinten bestehen im wesentlichen aus 0,5 bis 30 Gew.-% der gecoateten Pigmentgranulate, 85 bis 94,5 Gew.-% eines organischen Lösungsmittels und/oder hydrotroper Verbindung. Trägermaterialien für "Solvent based" Ink-Jet-Tinten können Polyolefine, Natur- und Synthesekautschuk, Polyvinylchlorid, Vinylchlorid/Vinylacetat-Copolymerisate, Polyvinylbutyrate, Wachs/Latex-Systeme oder Kombinationen davon, sein, die in dem "solvent" löslich sind.

Hot-Melt-Tinten basieren überwiegend auf organischen Verbindungen, wie Wachse, Fettsäuren, Fettalkohole oder Sulfonamide, die bei Raumtemperatur fest sind und bei Erwärmen flüssig werden, wobei der bevorzugte Schmelzbereich zwischen ca. 60 und ca. 140°C liegt.

Hot-Melt Ink-Jet-Tinten bestehen im wesentlichen aus 20 bis 95 Gew.-% Wachs, 1 bis 20 Gew.-% der, gegebenenfalls durch weitere Farbmittel nuancierten, gecoateten Pigmentgranulate, 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans.

Bei den in den vorstehend beschriebenen Aufzeichnungsflüssigkeiten enthaltenen Lösungsmitteln kann es sich um ein organisches Lösungsmittel oder um ein Gemisch derartiger Lösungsmittel handeln. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butyl-ether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Zur Herstellung der Aufzeichnungsflüssigkeiten benutztes Wasser wird vorzugsweise in Form von destilliertem oder entsalztem Wasser eingesetzt.

Als hydrotrope Verbindungen, die gegebenenfalls auch als Lösungsmittel dienen, können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

In den nachfolgenden Beispielen beziehen sich Teile auf Gewichtsteile.

### Herstellungsbeispiele für gecoatete Pigmentgranulate:

### Herstellungsbeispiel 1

316 g salzfreier, wasserfeuchter Presskuchen von gefinishtem Pigment P.Y. 180 (entspricht 87,5 g Trockenpigment) werden in 335 g Wasser mit Hilfe eines Rührers dispergiert. Nach Zugabe von 800 g Isobutanol und 37,5 g eines Polyethylenwachses (Tropfpunkt 103-108°C; Mₙ 1150) wird der Ansatz 2 Stunden bei 145°C gerührt. Dabei finden der Finishprozess und die Wachsbelegung des Pigmentes statt. Nach dem Finish wird das Isobutanol durch Wasserdampfdestillation entfernt und man erhält eine wässrige Suspension von mit Wachs belegtem Pigment P.Y. 180.
Durch Zugabe von Wasser wird die Suspension auf eine Feststoffkonzentration von 10 Gew.-% gestellt, dispergiert und durch Passieren durch eine Kolloid-Mühle homogenisiert. Anschließend wird die homogene Suspension in einem FSD-Sprühturm versprüht und dabei granuliert (Gaseintrittstemperatur: 190°C; Gasaustrittstemperatur: 100°C; Bettemperatur: 75°C).
Man erhält ein Pigmentgranulat mit himbeerartiger Struktur.

### Teilchenoberflächenladung:

Die elektrokinetische Teilchenoberfläche wird bestimmt wie in "Chimia 48 (1994) Seiten 516-517 und der darin aufgeführten Literatur beschrieben. Bei einem vermessenen Probenvolumen von 2 ml, und einer Pigmentkonzentration von 5 g/l, erhält man die entsprechende Pigmentteilchenoberflächenladung in mV/mg, wobei die Werte bei dem Eigen-pH-Wert der Substanzprobe vermessen wurden:

| | |
|---|---|
| pH | mV/mg |
| 8,33 | - 86,6 |

### Herstellungsbeispiel 2

126,5 g salzfreier, wasserfeuchter Presskuchen von ungefinishtem Rohpigment P.Y. 180 (entspricht 41,73 g Trockenpigment) werden wie unter Herstellungsbeispiel 1 beschrieben mit 10,4 g eines Polyethylenwachses (Tropfpunkt 105-112°C, Mₙ 1300) behandelt.
Die Coloristik wurde in Polyethylen geprüft und entspricht dem Pulvertyp. Teilchenoberflächenladung:
Die elektrokinetische Teilchenoberfläche wird bestimmt wie unter Herstellungsbeispiel 1 beschrieben.

| | |
|---|---|
| pH | mV/mg |
| 8,72 | - 79,1 |

### Herstellungsbeispiel 3

137 g salzfreier, wasserfeuchter Presskuchen von ungefinishtem Rohpigment P.Y.180 (entspricht 45 g Trockenpigment) werden in 390 g Wasser mit Hilfe eines Rührers dispergiert. Nach Zugabe von 19 g eines Polyethylenwachses (Tropfpunkt 114-18°c, Mₙ 1100) und 19 g eines Ladungssteuermittels (Polyestersalz gemäß DE-A-43 32 170, Beispiel 1) wird der Ansatz 1 h bei 140°C gerührt und wie in Herstellungsbeispiel 1 beschrieben weiterverarbeitet.

### Anwendungsbeispiele

### Beispiel 4

7 Teile Pigment-Granulat aus Herstellungsbeispiel 1 werden mittels eines Kneters innerhalb von 100 Minuten in 93 Teile eines Tonerbindemittels (Polyesterharz auf Bisphenol-A-Basis) homogen eingearbeitet. Anschließend wird auf einer Labor-Universalmühle gemahlen und dann auf einem Zentrifugalsichter klassifiziert.

In den nachfolgenden Beispielen erfolgt die Messung der q/m-Werte an einem üblichen q/m-Messstand. Die gewünschte Teilchenfraktion (4 - 25 µm) aus der Mahlung wird mit einem Carrier aktiviert, der aus mit Silikon beschichteten Ferrit-Teilchen der Größe 50 bis 200 µm besteht. Durch Verwendung eines Siebes mit einer Maschenweite von 2 µm wird sichergestellt, dass bei den Tonerausblasungen kein Carrier mitgerissen wird. Die Messungen erfolgen bei ca. 50 %iger Luftfeuchte. In Abhängigkeit von der Aktivierdauer werden folgende q/m-Werte [µC/g] gemessen:

| Aktivierdauer | q/m [µC/g] |
|---|---|
| 5 Min. | - 13 |
| 10 Min. | - 13 |
| 20 Min. | - 13 |
| 2 Std. | - 11 |

### Beispiel 5

6,3 Teile des Pigment-Granulates aus Herstellungsbeispiel 2 werden mittels eines Kneters innerhalb von 100 Minuten in 93,7 Teile eines Polyesterharzes auf Basis von Bisphenol-A eingearbeitet, gemahlen und gesichtet.

| Aktivierdauer | q/m [µC/g] |
|---|---|
| 5 Min. | - 13 |
| 10 Min. | - 10 |
| 30 Min. | - 10 |
| 2 Std. | - 10 |

### Beispiel 6

9,25 g Pigmentgranulat aus Herstellungsbeispiel 3 werden mittels eines Kneters innerhalb von 100 Minuten in 90,75 Teile eines Tonerbindemittels (Polyesterharz auf Bisphenol-A-Basis) homogen eingearbeitet, gemahlen und gesichtet.

| Aktivierdauer | q/m [µC/g] |
|---|---|
| 5 Min. | - 19 |
| 10 Min. | - 11 |
| 30 Min. | - 10 |
| 2 Std. | - 10 |

### Beispiel 7 (Vergleichsbeispiel): Nichtgecoatetes Pigmentpulver + Bindemittel

5 Teile der Pulverware von P.Y. 180 werden in 95 Teile eines Tonerbindemittels (Polyesterharz auf Bisphenol-A-Basis) eingearbeitet, gemahlen und gesichtet.

| Aktivierdauer | q/m [µC/g] |
|---|---|
| 5 Min. | - 10 |
| 10 Min. | - 9 |
| 30 Min. | - 6 |
| 2 Std. | - 3 |

### Beispiel 8 (Vergleichsbeispiel): Nichtgecoatetes Pigmentpulver + Wachs + Bindemittel

1,24 Teile des in Herstellungsbeispiel 2 eingesetzten Polyethylenwachses werden in 93,76 Teile eines Polyesterharzes auf Bisphenol-A-Basis eingearbeitet. Anschließend wurden 5 Teile P.Y. 180 Pulver innerhalb von 100 Minuten homogen eingeknetet. Mahlung und Sichtung erfolgen wie unter Beispiel 4 beschrieben.

| Aktivierdauer | q/m [µC/g] |
|---|---|
| 5 Min. | - 12 |
| 10 Min. | - 10 |
| 30 Min. | - 8 |
| 2 Std. | - 7 |

**Tabelle A: Übersicht über die Messungen an den Testtonern Beispiele 4 bis 8**

| | Bsp. 4 | Bsp. 5 | Bsp. 6 | Bsp. 7 (Vergl.) | Bsp. 8 (Vergl.) |
|---|---|---|---|---|---|
| q/m (5 min) [µC/g] | - 13 | - 13 | - 19 | - 10 | - 12 |
| q/m (10 min) [µC/g] | - 13 | - 10 | - 11 | - 9 | - 10 |
| q/m (30 min) [µC/g] | - 13 | - 10 | - 10 | - 6 | - 8 |
| q/m (2 Std.) [µC/g] | - 11 | - 10 | - 10 | - 3 | - 6 |

## Patentansprüche

1. Verwendung eines mit einem Wachs gecoateten Pigmentgranulats als Farbmittel in elektrophotographischen Tonern und Entwicklern, Pulverlacken, InkJet-Tinten, Elektretmaterialien und Farbfiltern, **dadurch gekennzeichnet, dass** das gecoatete Pigmentgranulat eine Teilchengröße zwischen 0,05 und 5 mm und einen Wachsgehalt von 1 bis 50 Gew.-%, bezogen auf das Gesamtgewicht des gecoateten Pigmentgranulats, aufweist.

2. Verwendung nach Anspruch 1, **dadurch gekennzeichnet, dass** das gecoatete Pigmentgranulat einen Wachsgehalt von 5 bis 40 Gew.-%, bezogen auf das Gesamtgewicht des gecoateten Pigmentgranulats, aufweist.

3. Verwendung nach Anspruch 1 oder 2, **dadurch gekennzeichnet, dass** das organische Pigment ein Azopigment oder ein polycyclisches Pigment ist.

4. Verwendung nach Anspruch 3, **dadurch gekennzeichnet, dass** das polycyclische Pigment ein Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Thiazinindigo-, Diketopyrrolopyrrol- und/oder Azomethinpigment ist.

5. Verwendung nach einem oder mehreren der Ansprüche 1 bis 4, **dadurch gekennzeichnet, dass** das Wachs ein Naturwachs, ein modifiziertes Naturwachs, ein teilsynthetisches Wachs, ein vollsynthetisches Wachs, ein Amidwachs, ein chlor- oder fluorhaltiges Polyolefinwachs, oder ein thermoplastisches Polyester-, Epoxid-, Styrol-Acrylat-Copolymer-, Styrol-Butadien-Copolymer- oder ein Cycloolefin-Copolymer-Harz ist.

6. Verwendung nach Anspruch 5, **dadurch gekennzeichnet, dass** das vollsynthetische Wachs ein Polyolefinwachs, ein Cycloolefincopolymerwachs oder ein Polyethylenglykolwachs ist.

7. Verwendung nach Anspruch 6, **dadurch gekennzeichnet, dass** das Polyolefinwachs ein polare Gruppen enthaltendes Polyolefinwachs ist, entstanden durch nachträgliche Oxidation des Polyolefinwachses, durch Pfropfreaktion mit Carbonsäure-, Carbonsäureester-, Carbonsäureanhydrid- oder Hydroxygruppen enthaltenden Monomeren oder durch Copolymerisation aus einem Olefin und einem Carbonsäure-, Carbonsäureester-, Carbonsäureanhydrid- oder Hydroxygruppen enthaltenden Monomer.

8. Verwendung nach einem oder mehreren der Ansprüche 1 bis 7, **dadurch gekennzeichnet, dass** das Wachs einen Tropfpunkt zwischen 60 und 180°C, vorzugsweise zwischen 80 und 140°C, hat.

9. Verwendung nach einem oder mehreren der Ansprüche 1 bis 8, **dadurch gekennzeichnet, dass** das gecoatete Pigmentgranulat sprühgetrocknet ist.

10. Verwendung nach einem oder mehreren der Ansprüche 1 bis 9, **dadurch gekennzeichnet, dass** das gecoatete Pigmentgranulat in Kombination mit einem Ladungssteuermittel aus der Gruppe der Triphenylmethane; Ammonium- und Immoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; salzartigen Struktursilikate; Calix(n)arene; Resorcinole; ringförmig verknüpfte Oligosaccharide, Interpolyelektrolytkomplexe; Polyestersalze; Metallkomplexverbindungen; Borkomplexe von 1,2-Dihydroxyaromaten, 1,2-Dihydroxyaliphaten oder 2-Hydroxy-1-Carboxyaromaten; Benzimidazolone; Azine, Thiazine und Oxazine, eingesetzt wird.

11. Verwendung nach Anspruch 10, **dadurch gekennzeichnet, dass** das Ladungssteuermittel zu 0,1 bis 30 Gew.-%, bezogen auf das Gesamtgewicht des gecoateten Pigmentgranulats, im Pigmentgranulat enthalten ist.

12. Verwendung nach einem oder mehreren der Ansprüche 1 bis 11 in Flüssigtonern oder Pulvertonern.

13. Verwendung nach einem oder mehreren der Ansprüche 1 bis 12, **dadurch gekennzeichnet, dass** das gecoatete Pigmentgranulat in einer Menge von 0,1 bis 90 Gew.-%, vorzugsweise 0,5 bis 40 Gew.-%, bezogen auf das Gesamtgewicht des elektrophotographischen Toners, Pulverlacks oder Elektretmaterials, eingesetzt wird.

14. Verwendung nach einem oder mehreren der Ansprüche 1 bis 13, **dadurch gekennzeichnet, dass** das gecoatete Pigmentgranulat als Masterbatch eingesetzt wird.

## Claims

1. The use of wax-coated pigment granules as colorants in electrophotographic toners and developers, powder coating materials, inkjet inks, electret materials, and color filters, wherein the coated pigment granules have a particle size of between 0.05 and 5 mm and a wax content of from 1 to 50% by weight, based on the overall weight of the coated pigment granules.

2. The use as claimed in claim 1, wherein the coated pigment granules have a wax content of from 5 to 40% by weight, based on the overall weight of the coated pigment granules.

3. The use as claimed in claim 1 or 2, wherein the organic pigment is an azo pigment or a polycyclic pigment.

4. The use as claimed in claim 3, wherein the polycyclic pigment is an isoindolinone, isoindoline, anthanthrone, thioindigo, quinophthalone, anthraquinone, dioxazine, phthalocyanine, quinacridone, perylene, perinone, thiazineindigo, diketopyrrolopyrrole and/or azomethine pigment.

5. The use as claimed in one or more of claims 1 to 4, wherein the wax is a natural wax, a modified natural wax, a semisynthetic wax, a fully synthetic wax, an amide wax, a chlorinated or fluorinated polyolefin wax, or a thermoplastic polyester resin, epoxy resin, styrene-acrylate copolymer resin, styrene-butadiene copolymer resin or a cycloolefin copolymer resin.

6. The use as claimed in claim 5, wherein the fully synthetic wax is a polyolefin wax, a cycloolefin copolymer wax or a polyethylene glycol wax.

7. The use as claimed in claim 6, wherein the polyolefin wax is a polyolefin wax containing polar groups which has been formed by subsequent oxidation of the polyolefin wax, by graft reaction with monomers containing carboxylic acid, carboxylic ester, carboxylic anhydride or hydroxyl groups, or by copolymerization of an olefin and a monomer containining carboxylic acid, carboxylic ester, carboxylic anhydride or hydroxyl groups.

8. The use as claimed in one or more of claims 1 to 7, wherein the wax has a dropping point of between 60 and 180°C, preferably between 80 and 140°C.

9. The use as claimed in one or more of claims 1 to 8, wherein the coated pigment granules are spray dried.

10. The use as claimed in one or more of claims 1 to 9, wherein the coated pigment granules are used in combination with a charge control agent selected from the group consisting of triphenylmethanes; ammonium and immonium compounds; iminium compounds; fluorinated ammonium compounds and fluorinated immonium compounds; biscationic acid amides; polymeric ammonium compounds; diallylammonium compounds; aryl sulfide derivatives; phenol derivatives; phosphonium compounds and fluorinated phosphonium compounds; salt-like structured silicates; calix(n)arenes; resorcinols; cyclically linked oligosaccharides, interpolyelectrolyte complexes; polyester salts; metal complex compounds; boron complexes of 1,2-dihydroxyaromatics, 1,2-dihydroxyaliphatics or 2-hydroxy-1-carboxyaromatics; benzimidazolones; azines, thiazines, and oxazines.

11. The use as claimed in claim 10, wherein the charge control agent is present in the pigment granules in an amount of from 0.1 to 30% by weight, based on the overall weight of the coated pigment granules.

12. The use as claimed in one or more of claims 1 to 11 in liquid toners or powder toners.

13. The use as claimed in one or more of claims 1 to 12, wherein the coated pigment granules are used in an amount of from 0.1 to 90% by weight, preferably from 0.5 to 40% by weight, based on the overall weight of the electrophotographic toner, powder coating material or electret material.

14. The use as claimed in one or more of claims 1 to 13, wherein the coated pigment granules are used in the form of a masterbatch.

## Revendications

1. Utilisation d'un granulé de pigment revêtu de cire en tant que colorant dans des toners et révélateurs électrophotographiques, vernis en poudre, encres à jet d'encre, matériaux électrets et filtres colorés, **caractérisée en ce que** le granulé de pigment revêtu présente une grosseur de particules comprise entre 0,05 et 5 mm et une teneur en cire de 1 à 50 % en masse, par rapport à la masse totale du granulé de pigment revêtu.

2. Utilisation selon la revendication 1, **caractérisée en ce que** le granulé de pigment revêtu présente une teneur en cire de 5 à 40 % en masse, par rapport à la masse totale du granulé de pigment revêtu.

3. Utilisation selon la revendication 1 ou 2, **caractérisée en ce que** le pigment organique est un pigment azoïque ou un pigment polycyclique.

4. Utilisation selon la revendication 3, **caractérisée en ce que** le pigment polycyclique est un pigment de la classe des isoindolinone, isoindoline, anthanthrone, thioindigo, quinophtalone, anthraquinone, dioxazine, phtalocyanine, quinacridone, pérylène, périnone, thiazinindigo, dicétopyrrolopyrrole et/ou azométhine.

5. Utilisation selon une ou plusieurs des revendications 1 à 4, **caractérisée en ce que** la cire est une cire naturelle, une cire naturelle modifiée, une cire partiellement synthétique, une cire entièrement synthétique, une cire d'amide, une cire de polyoléfine chlorée ou fluorée, ou une résine thermoplastique polyester, époxyde, copolymère styrène-acrylate, copolymère styrène-butadiène ou copolymère cyclooléfinique.

6. Utilisation selon la revendication 5, **caractérisée en ce que** la cire entièrement synthétique est une cire de polyoléfine, une cire de copolymère cyclooléfinique ou une cire de polyéthylèneglycol.

7. Utilisation selon la revendication 6, **caractérisée en ce que** la cire de polyoléfine est une cire de polyoléfine contenant des groupes polaires, formée par oxydation ultérieure de la cire de polyoléfine, par réaction de greffage de monomères contenant des groupes acide carboxylique, ester d'acide carboxylique, anhydride d'acide carboxylique ou hydroxy ou par copolymérisation d'une oléfine et d'un monomère contenant des groupes acide carboxylique, ester d'acide carboxylique, anhydride d'acide carboxylique ou groupe hydroxy.

8. Utilisation selon une ou plusieurs des revendications 1 à 7, **caractérisée en ce que** la cire a un point de goutte compris entre 60 et 180°C, de préférence entre 80 et 140°C.

9. Utilisation selon une ou plusieurs des revendications 1 à 8, **caractérisée en ce que** le granulé de pigment revêtu est séché par pulvérisation.

10. Utilisation selon une ou plusieurs des revendications 1 à 9, **caractérisée en ce que** le granulé de pigment revêtu est utilisé en combinaison avec un agent de contrôle de charge du groupe des triphénylméthanes ; des composés d'ammonium et d'immonium ; des composés d'iminium ; des composés d'ammonium fluorés et d'immonium fluorés ; des amides d'acides biscationiques ; des composés d'ammonium polymères ; des composés de diallylammonium ; des dérivés d'arylsulfure ; des dérivés du phénol ; des composés de phosphonium et des composés de phosphonium fluorés ; des structures de silicates de type sel ; des calix(n)arènes ; des résorcinols ; des oligosaccharides reliés en cycle ; des complexes d'interpolyélectrolytes ; des sels de polyesters ; des composés à complexes métallifères ; des complexes de bore de 1,2-dihydroxyaromatiques, de 1,2-dihydroxyaliphatiques ou 2-hydroxy-1-carboxy-aromatiques ; des benzimidazolones ; des azines, des thiazines et des oxazines.

11. Utilisation selon la revendication 10, **caractérisée en ce que** l'agent de contrôle de charge est contenu dans le granulé de pigment en une quantité de 0,1 à 30 % en masse, par rapport à la masse totale du granulé de pigment revêtu.

12. Utilisation selon une ou plusieurs des revendications 1 à 11 dans des toners liquides ou toners en poudre.

13. Utilisation selon une ou plusieurs des revendications 1 à 12, **caractérisée en ce que** le granulé de pigment revêtu est utilisé en une quantité de 0,1 à 90 % en masse, de préférence de 0,5 à 40 % en masse, par rapport à la masse totale du toner électrophotographique, du vernis en poudre ou de la matière électret.

14. Utilisation selon une ou plusieurs des revendications 1 à 13, **caractérisée en ce que** le granulé de pigment revêtu est utilisé en tant que mélange-maître.
